# EUROPEAN PATENT APPLICATION

(11) **EP 2 177 928 A1**
(43) Date of publication of application: **21.04.2010**
(21) Application number: 08019540.7
(22) Date of filing: 07.11.2008
(51) Int. Cl.: G01S 1/00, G01S 5/14

(54) **Method for providing indoor positioning information to a navigation application based on the conversion of the positioning information to a standard format**

(30) Priority: 15.10.2008 EP 08018098
(71) Applicant: Siemens Aktiengesellschaft, 80333 München (DE)
(72) Inventor: Huth, Hans-Peter, 80638 München (DE); Ramirez, Alejandro, 80799 München (DE)

(57) **Abstract**

The invention describes a method for operating a positioning system (11), comprising the steps of:
- providing a mobile device (20);
- providing an indoor positioning system (11) for determining a position of the mobile device (20) within a predetermined area of a building and/or a non-public area, the position being represented as first data in a first data format and/or in a first coordinate system (11);
- running an outdoor positioning application (23) on the mobile device (20), the outdoor positioning application (23) being able to process second data in a second data format and/or in a second coordinate system (11) and to receive the second data via a predefined interface;
- transforming the first data into the second data; and
- providing the second data at the predefined interface for being processed by the outdoor positioning application (23) to output the determined indoor position using the outdoor positioning application (23).

## Description

The invention relates to a method for operating a positioning system. The invention further relates to a positioning system.

Outdoor positioning systems are becoming ubiquitous since GPS devices are included in mobile devices, like cell phones, PDAs (personal digital assistant), watches and even in running shoes. The availability of GPS-satellites free of charge has accelerated the development of thousands of software applications. Examples of these outdoor positioning software applications are Google Earth, iGo and TomTom.

In contrast thereto, there exists only a small number of software applications for indoor positioning systems. A reason for this might be that it is more difficult to determine the position inside a building or a non-public area due to problems with signal strength or the number of available satellites. As a result, methods of achieving indoor positioning are not standardized and therefore most of available software applications are proprietary.

There are indoor positioning systems that support outdoor positioning solutions. However, they are in reality two different systems sharing a single graphical user interface (GUI). Therefore, communication protocols, formats and ports used for receiving the indoor position are completely different to those used to receive an outdoor position.

A typical application scenario for the mentioned situation is a delivery person who moves with a mobile device through a non-public area and/or a building looking for specific locations like offices and so on. Current solutions require different software applications for each type of indoor positioning system. Different mobile devices might also be required. Because the amount of indoor positioning systems currently available is quite a lot, the practicability of this scenario is extremely limited.

It is therefore an object of the present invention to provide an improved method for operating a positioning system, especially an indoor positioning system. It is a further object of the present invention to provide a positioning system which eliminates the need for ongoing transformation of data when positioning applications and/or positioning technologies change while using the positioning system.

These objects are solved by a method for operating a positioning system according to claim 1 and a positioning system according to claim 14. Improvements of the invention are set out in the dependent claims.

The invention provides a method for operating a positioning system comprising the steps of: providing a mobile device; providing an indoor positioning system for determining a position of the mobile device within a predetermined area of a building and/or a non-public area, the position being represented as first data in a first data format and/or in a first coordinate system; running an outdoor positioning application on the mobile device, the outdoor positioning application being able to process second data in a second data format and/or in a second coordinate system and to receive the second data via a predefined interface; transforming the first data into the second data; and providing the second data at the predefined interface for being processed by the outdoor positioning application to output the determined indoor position using the outdoor positioning application.

Transforming the first data into the second data is such that the second data appear to be data evaluated by an outdoor positioning system which can be received and processed by the outdoor positioning application running on the mobile device. The outdoor positioning application is not able to distinguish the information source from the one originating from real GPS-satellites. Therefore, it is possible to use any known outdoor positioning application running on the mobile device for outputting information evaluated by an indoor positioning system. With the method according to the invention a specific transformation of data for an exchange between the indoor positioning system and the outdoor positioning application in the mobile device is not necessary any more. This is achieved by transforming data from the indoor positioning system which is compatible with almost every outdoor positioning application.

According to a further improvement, the step of transforming the first data into the second data comprises a coordinate transformation of data from the first coordinate system into the second coordinate system. Furthermore, it is suggested that the step of transforming the first data into the second data comprises a data format conversion to ASCII data format, especially in a way being suitable for a serial communication between the indoor positioning system and the mobile device. According to these improvements state-of-the-art mobile devices and outdoor positioning applications can be used for outputting information evaluated by an indoor positioning system. There is no need to modify any hardware component (mobile device, indoor positioning system) to carry out the method according to the invention.

Especially, the data format conversion is carried out according to the standard NMEA 0183. As an advantage, most outdoor positioning applications support NMEA 0183 data format. NMEA 0183 is a combined electrical and data specification for communication between marine electronic devices, such as echo sounder, sonars, anemometer (for measuring wind speed and direction), gyrocompass, autopilot, GPS receivers and many other types of instruments. The NMEA 0183 standard uses a simple ASCII serial communication protocol that defines how data is transmitted. NMEA 0183 implementations may vary. However, they often are able to interoperate with RS-232, RS-423 and RS-422 interfaces which can be used for carrying out the method of the invention. As is known to one skilled in the art, each signal runs over a pair of wires.

According to a further improvement, as predefined interface a first communication port emulator connected to the outdoor positioning application is used to provide the second data to the outdoor positioning application. Furthermore, the second data provided after the step of transformation are fed or transferred to a second communication port emulator. In a further improvement the first and/or the second communication port emulator are serial port emulators. Hence, it is proposed to emulate a standard communication port that will allow indoor positioning systems to interface with any outdoor positioning application. Such interface enables the use of existing software applications for outdoor positioning for indoor positioning systems. Using the proposed standardized data format will guarantee interoperability between the indoor positioning system and the outdoor positioning application running on the mobile device.

According to a further improvement, the first and the second communication port emulator are connected to a first and a second redirector, respectively, the first and the second redirector being communicatively connected via a data transmission network for transferring the second data to the outdoor positioning application. The data transmission network may be represented by any data communication network. This network can be any wireless or wired network, for example a TCP/IP network.

According to a further improvement, the communication path between the first redirector and the second redirector is unidirectional for transferring data from the indoor positioning system towards the outdoor positioning application running on the mobile device. An unidirectional communication path means that no forwarding of information from the outdoor positioning application towards the indoor positioning system is required or done.

According to a further improvement, the first data format and/or the first coordinate system is proprietary according to the indoor positioning system. Proprietary means that the technology used for determining the position may be of any type wherein the data format and/or the first coordinate system may be chosen according to specific circumstances of the technology, software applications, algorithms or the assigned building and/or non-public area.

According to a further embodiment of the invention, the determination of the position of the mobile device can be done by the mobile device itself or an independent indoor positioning server. Determining the position of the mobile device by the mobile device itself may be done with the help of database information stored in the mobile device and communication to local access points of the building and/or the non-public area. The determination of the position of the mobile device by the indoor positioning server can be done by data exchange between one or more access points of the indoor positioning systems with the mobile device or by video-based analysis of the movement of the mobile device.

According to a further embodiment, a location API (Application Programmable Interface) receives the second data from the first communication port emulator for interpreting the second data and supporting the outdoor positioning application in processing the second data. With the help of a location API some or all of the processing for determining the position of the mobile device can be prepared. Hence, the outdoor positioning application just has to receive the results of the processing with regard to its position.

Furthermore, a computer program product which is directly loadable into the internal memory of one or a plurality of digital computers operatively connected to each other is suggested. The computer program product comprises software code portions for performing the steps of one of the preceding claims when said product is run on the one or the plurality of computers.

The invention further suggests a positioning system. This comprises: a mobile device; an indoor positioning system for determining a position of the mobile device within a predetermined area of a building and/or a non-public area, the position being represented as first data in the first data format and/or in a first coordinate system; the mobile device being adapted to run an outdoor positioning application, the outdoor positioning application being able to process second data in a second data format and/or in a second coordinate system and to receive the second data via a predefined interface; and a transformation means for transforming the first data into the second data enabling the mobile device to receive and output the determined indoor position using the outdoor positioning application.

The method for operating the positioning system and the positioning system have lots of advantages:

A first one is that there is a vast amount of software applications which is available for outdoor positioning systems. They can be made compatible with any indoor positioning system at once without any changes in the software. Furthermore, lots of these software applications for outdoor positioning are available free of charge.

A further advantage is that the transformation means can be programmed to accept any proprietary input format. That means that a mobile device can receive the position from any kind of indoor positioning system without noticing it. A virtual serial port delivering data in the NMEA 0183 format will make this transparent to the outdoor positioning software application used on the mobile device.

A further advantage is that the NMEA 0183 standard includes additional information which can be sent to the mobile device for processing it, such as current time, accuracy of measurement, altitude, current speed, orientation, and so on.

The invention will be explained in more detail with the help of the accompanying figures.
- Fig. 1: shows a schematic view of a positioning system according to a first embodiment of the invention, and
- Fig. 2: shows a schematic view of a positioning system according to a second embodiment of the invention.

The invention proposes to provide the emulation of a standard communication port that will allow any indoor positioning system to interface with any outdoor positioning application. The advantage is that such an interface will open the door to thousands of existing outdoor positioning applications to be used for indoor positioning. Using a well-known standardized data format which will be described below in more detail will guarantee interoperability.

The invention is based on the fact that software applications for outdoor positioning support the NMEA 0183 data format. NMEA 0183 is a combined electrical and data specification for communication between marine electronic devices such as echo sounder, sonars, anemometer (for measuring wind speed and direction), gyrocompass, autopilot, GPS receivers and many other types of instruments. The standard of NMEA 0183 has been defined by, and is controlled by the U.S. based National Marine Electronics Association. The NMEA 0183 standard uses a simple ASCII serial communications protocol that defines how data is transmitted. NMEA 0183 implementations vary, but can often interoperate with RS-232, RS-423 and RS-422. As set out in the standard, each signal runs over a pair of wires.

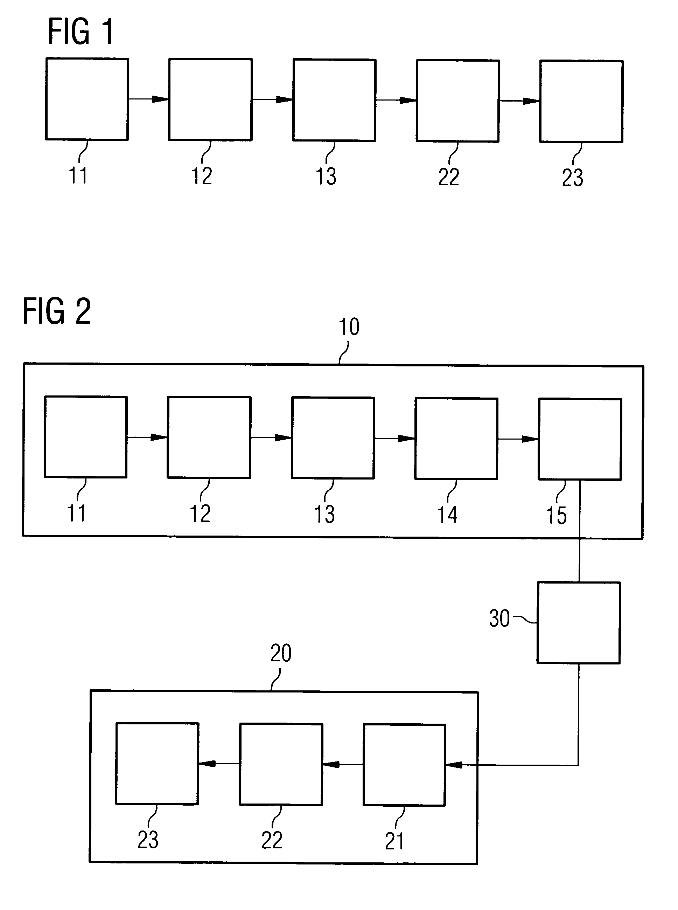

Figures 1 and 2 are two schematic embodiments showing the chain of elements to allow the connection between every indoor positioning system and an outdoor positioning application. All of these individual components can be found in the current state-of-the-art.

The first embodiment of a positioning system according to the invention shown in Fig. 1 may be represented solely by an indoor positioning mobile device. Such a device comprises an indoor positioning system 11, i.e. a means which is able to determine the position of the mobile device within a predetermined area of a building and/or a non-public area. The determined position is represented as first data in a first data format and in a first coordinate system. The technology and/or the method for determining the position of the mobile device is not relevant for the invention. According to this first embodiment of Fig. 1 it is only to be noted that the determination of the position of the mobile device is done by the mobile device itself. According to the used technology and/or algorithm to determine the position of the mobile device the first data format and/or the first coordinate system is proprietary. This means that the first data may be represented in different data format and/or coordinate systems if the determination of the position of the mobile device is done by different methods.

The first data evaluated by the indoor positioning system 11 is transferred to a coordinate transformation means 12. The coordinate transformation means 12 will make a transformation of the first data into second data with respect to their coordinate systems. After having completed the coordinate transformation the second data are transferred to a format conversion means 13 through which a format conversion to NMEA 0183 standard is executed. The second data is represented in a second data format and/or in the second coordinate system. After the second data have been converted according to the NMEA 0183 standard, they are transferred to an interface emulator 22 to mimic a local serial port. The interface emulator 22 is connected to an outdoor positioning application 23, so that the information provided at the interface emulator 22 will appear to the outdoor positioning application 23 to be coming from a physical serial port located locally at the mobile device.

In the second embodiment according to Fig. 2 an indoor positioning server 10 calculates and determines the position of the user and the mobile device 20, respectively. In the mobile device 20 the position of the user and the mobile device 20, respectively, will be outputted, e.g. displayed. The mobile device can be a mobile phone, a smart phone, and so on.

The indoor positioning server 10 comprises an indoor positioning system or means 11 that calculates the position of the user through any means available. The determination of the position could be done by analysing the signal strength of a WLAN signal, a time-of-flight-information, acoustic sensors, video analysis, and so on. This position will typically be calculated in a proprietary coordinate system, so that the position determined by the indoor positioning means 11 is represented as first data in a first data format and/or in a first coordinate system.

The first data being represented in the first coordinate system will be transformed into second data being represented in the second coordinate system by coordinate transformation means 12. The position information will then be converted to an NMEA 0183 message which is the standard data format used by almost all GPS devices. This is done by the format conversion means 13. A typical NMEA string is shown in detail below:

GLL,2924.11158,N,1211.07392,W,75.97,M<CR><LF>,
wherein

| Description | Form |
|---|---|
| Latitude/Longitude message | GLL |
| Latitude in degrees/minutes | IIII.IIIII |
| Direction of latitude | (N or S) |
| Longitude in degrees/minutes | yyyy.yyyyy |
| Direction of longitude | (E or W) |

After the format conversion has taken place, the data will be taken by a "serial port emulator" to mimic a local serial port. This information will appear to all software applications running on the same computer to be coming from a physical serial port located locally. The emulator is represented by reference numeral 14 of the indoor positioning server 10.

A so-called "COM redirector" application 15 will take the information for the serial port and transfer it to any data transmission network 30 to a respective redirector 21 of the mobile device 20. The redirector 21 is connected to an interface emulator 22 of the mobile device 20. The interface emulator 22 itself is connected to the outdoor positioning application 23 running on the mobile device 20. The data transmission network 30 can be any wireless or wired network, e.g. a TCP/IP network. At the endpoint, which is represented by the mobile device 20, the redirector 21 (being represented by a software installed on the mobile device 20) in conjunction with the interface emulator will make a virtual serial port available with readily available information.

In a further embodiment, not shown in Fig. 2, an additional software component might be provided between the interface emulator 22 and the outdoor positioning application 23. The software component can be a so-called location application programmable interface (API) for mobile devices which is a software that helps to make the serial port transparent to the outdoor positioning software. The location API might be adapted to make an additional NMEA data transformation, for instance in dependency of required accuracy or policies. Especially the location API can be used to make the interpretation of the second data instead of the outdoor positioning application.

The resulting signal - either from the location API or the interface emulator 22 - will be received by the outdoor positioning application 23. Inside the outdoor positioning application configuration it is necessary to select the new local serial port as the source of data. The outdoor positioning application will see a locally attached GPS device.

The chain of elements explained above will allow the outdoor positioning application to work seamlessly while delivering an accurate indoor position. It is clear to a person skilled in the art that the outdoor positioning application needs to have information about topology of the building and/or the non-public area. These maps can be provided within the mobile device or in a central server so that the respective data have to be downloaded by the mobile device.

The communication path between the indoor positioning server 10 and the mobile device 20 is unidirectional meaning that no forwarding of information from the outdoor positioning software towards the indoor positioning server is required. It is recommendable that exact NMEA messages should be used.

Literaturverzeichnis:
1) http://en.wikipedia.org/wiki/NMEA_0183 (Stand

## Claims

1. A method for operating a positioning system (11), comprising the steps of:
- providing a mobile device (20);
- providing an indoor positioning system (11) for determining a position of the mobile device (20) within a predetermined area of a building and/or a non-public area, the position being represented as first data in a first data format and/or in a first coordinate system (11);
- running an outdoor positioning application (23) on the mobile device (20), the outdoor positioning application (23) being able to process second data in a second data format and/or in a second coordinate system (11) and to receive the second data via a predefined interface;
- transforming the first data into the second data; and
- providing the second data at the predefined interface for being processed by the outdoor positioning application (23) to output the determined indoor position using the outdoor positioning application (23).

2. The method according to claim 1, wherein the step of transforming the first data into the second data comprises a coordinate transformation of data from the first coordinate system (11) into the second coordinate system (11).

3. The method according to claim 1 or 2, wherein the step of transforming the first data into the second data comprises a data format conversion to ASCII data format, especially in a way being suitable for a serial communication between the indoor positioning system (11) and the mobile device (20).

4. The method according to claim 3, wherein the data format conversion is carried out according to the standard NMEA 0183.

5. The method according to one of the preceding claims, wherein as predefined interface a first communication port emulator (22) connected to the outdoor positioning application (23) is used to provide the second data to the outdoor positioning application (23).

6. The method according to one of the preceding claims, wherein the second data provided after the step of transformation are fed to a second communication port emulator (14).

7. The method according to claim 5 or 6, wherein the first and/or the second communication port emulator (22, 14) are serial port emulators.

8. The method according to claim 6 or 7, wherein the first and the second communication port emulator (22, 14) are connected to a first and a second redirector, respectively, the first and the second redirector being communicatively connected via a data transmission network (30) for transferring the second data to the outdoor positioning application (23).

9. The method according to claim 8, wherein the communication path between the first redirector and the second redirector is unidirectional for transferring data from the indoor positioning system (11) towards the outdoor positioning application (23) of the mobile device (20).

10. The method according to one of the preceding claims, wherein the first data format and/or the first coordinate system (11) is proprietary according to the indoor positioning system (11).

11. The method according to one of the preceding claims, wherein determining the position of the mobile device (20) is done by the mobile device (20) itself or an indoor positioning server.

12. The method according to one of the preceding claims, wherein a location API receives the second data from the first communication port emulator (22) for interpreting the second data and supporting the outdoor positioning application (23) in processing the second data.

13. A computer program product directly loadable into the internal memory of one or a plurality of digital computers operatively connected to each other, comprising software code portions for performing the steps of one of the preceding claims when said product is run on the one or the plurality of computers.

14. Positioning system (11), comprising:
- a mobile device (20);
- an indoor positioning system (11) for determining a position of the mobile device (20) within a predetermined area of a building and/or a non-public area, the position being represented as first data in a first data format and/or in a first coordinate system (11);
- the mobile device (20) being adapted to run an outdoor positioning application (23), the outdoor positioning application (23) being able to process second data in a second data format and/or in a second coordinate system (11) and to receive the second data via a predefined interface; and
- a transformation means for transforming the first data into the second data enabling the mobile device (20) to receive and output the determined indoor position using the outdoor positioning application (23).
